# EUROPÄISCHE PATENTANMELDUNG

(11) **EP 1 961 779 A1**
(43) Veröffentlichungstag der Anmeldung: **27.08.2008**
(21) Anmeldenummer: 08002510.9
(22) Anmeldetag: 12.02.2008
(51) Int. Cl.: C08G 18/48, C08G 18/78

(54) **Verfahren zur Herstellung von Polyurethan-Weichschaumstoffen mit niedriger Rohdichte**

(30) Priorität: 24.02.2007 DE 102007009126
(71) Anmelder: Bayer MaterialScience AG, 51368 Leverkusen (DE)
(72) Erfinder: Klesczewski, Bert Dr., 51069 Köln (DE); Otten, Manduela, 53175 Leverkusen (DE); Dohmen, Bernd, 40789 Monheim (DE)

(57) **Zusammenfassung**

Der Gegenstand der vorliegenden Erfindung betrifft ein Verfahren zur Herstellung von mechanisch stauchbaren Polyurethanschaumstoffen niedriger Rohdichte, die Polyurethanschaumstoffe selber sowie ihre Verwendung zur Schall- und Wärmeisolierung.

## Beschreibung

Der Gegenstand der vorliegenden Erfindung betrifft ein Verfahren zur Herstellung von mechanisch stauchbaren Polyurethanschaumstoffen niedriger Rohdichte, die Polyurethanschaumstoffe selber sowie ihre Verwendung zur Schall- und Wärmeisolierung.

Es bestand einer großer Bedarf Polyurethanschaumstoffe bereit zustellen, die mechanisch stauchbar sind und eine niedrige Rohdichte aufweisen, um sie als Schall- und Wärmeisolierungsmaterial zu verwenden. Unter Polyurethanschaumstoffen niedriger Rohdichte werden für Wärme- und/oder Schalldämmung geeignete, harte, stauchbare Polyurethanschaumstoffe verstanden, die eine Rohdichte von weniger als 25 kg/m³ und zudem eine mechanische Belastbarkeit aufweisen, die sich in Messwerten für Zugfestigkeit von mehr als 20 kPa und Bruchdehnung von mehr als 10 % ausdrückt.

Derartige Schaumstoffe werden üblicherweise entweder kontinuierlich oder diskontinuierlich auf der Basis von verschiedenen Isocyanaten, ausgewählt aus der Gruppe der phosgenierten Kondensationsprodukte von Formaldehyd und Anilin, der so genannten MDI-Produkte, hergestellt.

Ein erhebliches Problem dieser auf Basis von Isocyanaten aus der Gruppe der MDI-Produkte hergestellten Schaumstoffe ist hierbei ihre geringe mechanische Belastbarkeit, die sich in Werten von weniger als 10% für die Bruchdehnung und weniger als 20 kPa für die Zugfestigkeit niederschlägt, was sich in der Weiterverarbeitbarkeit ungünstig auswirkt.

Die Aufgabe der vorliegenden Erfindung ist daher, ein Verfahren bereitzustellen, das es ermöglicht, Polyurethanschaumstoffe mit Rohdichten von weniger als 25 kg/m³ mit verbesserten mechanischen Eigenschaften herzustellen.

Diese Aufgabe wird gelöst durch ein Verfahren zur Herstellung von Polyurethanschaumstoffen mit einer Rohdichte von weniger als 25 kg/m³, bei dem
I) eine Polyolzusammensetzung, enthaltend
   a) 30-100 Gew.-%, bezogen auf die Gesamtmenge der Polyolzusammensetzung I eines Polyoxyalkylenpolyetherpolyols mit einer nominellen Funktionalität von 2-4, einer durchschnittlichen Molmasse von 1500-6000, einem Anteil von größer 35% an sekundären Hydroxylendgruppen, bezogen auf die Gesamtzahl an Hydroxylendgruppen des Polyoxyalkylenpolyetherpolyols sowie
   b) 0-50 Gew.-% bezogen auf die Gesamtmenge der Polyolzusammensetzung I eines Polyoxyalkylenpolyetherpolyols mit einer nominellen Funktionalität von 2-3,5, einer durchschnittlichen Molmasse von 400-1000 sowie
   c) 0-50 Gew.-% bezogen auf die Gesamtmenge der Polyolzusammensetzung I eines Polyoxyalkylenpolyetherpolyols mit einer nominellen Funktionalität von 4-8, einer durchschnittlichen Molmasse von 300-1000 sowie
   d) 0- 30 Gew.-% bezogen auf die Gesamtmenge der Polyolzusammensetzung I eines Polyesterpolyols mit einer Hydroxylzahl von 40-500 mit einem
II) Polyisocyanatzusammensetzung mit einem Isocyanatgehalt von 31-43 Gew.-% bezogen auf die Gesamtmenge der Polyisocyanatzusammensetzung in einer Menge entsprechend einem Index NCO/OH von 25-150, enthaltend
   a) 20-100 Gew.-% bezogen auf die Gesamtmenge der Polyisocyanatzusammensetzung II eines modifizierten Toluylendiisocyanats mit einem NCO-Gehalt von weniger als 44 Gew.-%, bezogen auf das modifizierte Toluylendiisocyanat II)a) sowie
   b) 0-80 Gew.-% bezogen auf die Gesamtmenge der Polyisocyanatzusammensetzung II eines Isocyanats aus der Gruppe der MDI-Produkte sowie
III) 6-40 Gewichtsteilen Wasser, bezogen auf die Gesamtmenge der Polyolzusammensetzung I, sowie
IV) gegebenenfalls physikalischen Treibmitteln,
V) Katalysatoren,
VI) Flammschutzmitteln,
VII) Stabilisatoren sowie
VIII) gegebenenfalls weiteren Hilfs- und Zusatzstoffen
umgesetzt werden.

Vorteilhaft ist das erfindungsgemäße Verfahren, wenn der Index NCO/OH der Polyisocyanatzusammensetzung II im Bereich von 35-120 liegt.

Vorteilhaft ist das erfindungsgemäße Verfahren, wenn die verwendete Polyisocyanatzusammensetzung II einen Isocyanatgehalt von 35-39 Gew.-%, bezogen auf die gesamte Polyisocyanatzusammensetzung II aufweist.

Vorteilhaft ist das erfindungsgemäße Verfahren, wenn die verwendete Polyisocyanatzusammensetzung II aus
a) 50-100 Gew.-% bezogen auf die Gesamtmenge der Polyisocyanatzusammensetzung II eines modifizierten Toluylendiisocyanats mit einem NCO-Gehalt von weniger als 44 Gew.-%, bezogen auf das modifizierte Toluylendiisocyanat II)a) sowie
b) 0-50 Gew.-% bezogen auf die Gesamtmenge der Polyisocyanatzusammensetzung II eines Isocyanats aus der Gruppe der MDI-Produkte
besteht.

Vorteilhaft ist das erfindungsgemäße Verfahren, wenn die verwendete Polyisocyanatzusammensetzung II aus 95 - 100 Gew.-% bezogen auf die Gesamtmenge der Polyisocyanatzusammensetzung II eines modifizierten Toluylendiisocyanats II)a) mit einem NCO-Gehalt von weniger als 44 Gew.-% besteht.

Vorteilhaft ist das erfindungsgemäße Verfahren, wenn das verwendete modifizierte Toluylendiisocyanat mit einem NCO-Gehalt von weniger als 44 Gew.-%, bezogen auf das modifizierte Toluylendiisocyanat II)a) durch Modifikation einer Mischung von 65-100 Gew.-% bezogen auf die Gesamtmenge des modifizierten Toluylendiisocyanats II)a), 2,4-Toluylendiiscocyanat mit 0-35 Gew.- % bezogen auf die Gesamtmenge des modifizierten Toluylendiisocyanats II)a), 2,6-Toluylendiiscocyanat mit einer Komponente, enthaltend mindestens zwei gegenüber Isocyanaten reaktive Gruppen, erhalten wird.

Ein weiterer Gegenstand der Erfindung ist ein Polyurethanschaumstoff erhältlich nach dem erfindungsgemäßen Verfahren.

Ein weiterer Gegenstand der Erfindung ist die Verwendung des erfindungsgemäßen Polyurethanschaumstoffes zur Schall- und/oder Wärmeisolierung.

Die zur Herstellung der Polyolmischungen I verwendeten Polyoxyalkylenpolyetherpolyole I)a), I)b) und I)c) können z.B. durch Polyaddition von Alkylenoxiden an polyfunktionelle Startverbindungen in Gegenwart von basischen Katalysatoren oder Doppelmetallcyanid(DMC)-Katalysatoren hergestellt werden. Bevorzugte Starterverbindungen sind Wasser sowie Moleküle mit zwei bis acht Hydroxylgruppen pro Molekül wie Triethanolamin, 1,2-Ethandiol, 1,2-Propandiol, 1,3-Propandiol, Diethylenglykol, Dipropylenglykol, Triethylenglykol, Tripropylenglykol, 1,2-Butandiol, 1,3-Butandiol, 1,4-Butandiol, 1,2-Hexandiol, 1,4-Hexandiol, 1,5-Hexandiol, 1,6-Hexandiol, Glycerol, Trimethylolpropan, 1,2-Diaminoethan, Pentaerythrit, Mannit, Sorbit oder Saccharose.

Bevorzugt zur Herstellung der erfindungsgemäß eingesetzten Poly(oxyalkylen)polyole verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch oder blockweise oder beides nacheinander umzusetzen. Näheres ist "Ullmanns Encyclopädie der industriellen Chemie", Band A 21, 1992, Seite 670 f. zu entnehmen.

Bevorzugte polyfunktionelle Startverbindungen für das Polyoxyalkylenpolyetherpolyol I)a) sind Glycerin, 1,2-Propylenglykol, Dipropylenglykol, Trimethylolpropan, sowie Mischungen hieraus. Die bevorzugte Funktionalität des Polyoxyalkylenpolyetherpolyols I)a) beträgt 2,5-3,0. Die bevorzugte Molmasse des Polyoxyalkylenpolyetherpolyols I)a) beträgt 2500-5000. Die bevorzugte Menge an Methyloxiran, bezogen auf die Gesamtmenge an verwendetem Alkylenoxid, beträgt 80-100 Gew.-%.

Bevorzugte polyfunktionelle Startverbindungen für das Polyoxyalkylenpolyetherpolyol I)b) sind z.B. Glycerin, 1,2-Ethandiol, 1,2-Propylenglykol, Dipropylenglykol, Trimethylolpropan, 1,2-Diaminoethan sowie Mischungen hieraus. Die bevorzugte Funktionalität des Polyoxyalkylenpolyetherpolyols I)b) beträgt 2,0-3,0. Die bevorzugte Molmasse des Polyoxyalkylenpolyetherpolyols I)b) beträgt 500-900.

Bevorzugte polyfunktionelle Startverbindungen für das Polyoxyalkylenpolyetherpolyol I)c) sind z.B. Glycerin, 1,2-Ethandiol, 1,2-Propylenglykol, Dipropylenglykol. Die bevorzugte Funktionalität des Polyoxyalkylenpolyetherpolyols I)c) beträgt 4,0-6,0. Die bevorzugte Molmasse des Polyoxyalkylenpolyetherpolyols I)c) beträgt 350-900.

Die zur Herstellung der erfindungsgemäßen Polyolmischungen I verwendeten Polyesterpolyole I)d) können z. B. aus Polycarbonsäuren und Polyolen hergestellt werden. Hierfür geeignete Polycarbonsäuren werden ausgewählt aus der Gruppe von Bernsteinsäure, Glutarsäure und Adipinsäure, oder Mischungen dieser Säuren oder ihrer Anhydride oder der Ester mit monofunktionellen C₁-C₄ Alkoholen. Bevorzugt eingesetzte monofunktionelle Alkohole für die Ester der aliphatischen Polycarbonsäuren sind ausgewählt aus der Gruppe von Methanol, Ethanol, 1-Propanol, Isopropanol, 1-Butanol, 2-Butanol und tert. Butanol. Besonders bevorzugte Polycarbonsäuren sind ausgewählt aus der Gruppe von Bernsteinsäure, Glutarsäure und Adipinsäure, besonders bevorzugt ist Adipinsäure.

Die Polyole zur Herstellung der Polyesterpolyole I)d) sind ausgewählt aus der Gruppe unverzweigter aliphatischer Diole mit α,ω-endständigen Hydroxylgruppen, welche gegebenenfalls bis zu drei Ethergruppen aufweisen können und Polyolen mit einer Hydroxylfunktionalität größer 2. Bevorzugte Polyole sind 1,2-Ethylenglykol, 1,3-Propylenglykol, 1,4-Butylenglykol, 1,6-Hexylenglykol, Diethylenglykol, Triethylenglykol und Tetraethylenglykol. Besonders bevorzugt ist Diethylenglykol. Bevorzugte Polyole mit einer Hydroxylfunktionalität größer als 2 sind ausgewählt aus der Gruppe von 1,1,1-Trimethylolpropan, Pentaerythrit und Glycerin.

Die Molmasse der Polyesterpolyole wird hierbei durch Wahl des Unterschusses an Carboxylgruppen im Vergleich zu Hydroxylgruppen gesteuert. Erfindungsgemäße Polyetherester weisen hierbei Hydroxylzahlen von 40 bis 500 mg KOH/g auf, bevorzugt sind 50 bis 300 mg KOH/g.

Als Polyisocyanatzusammensetzung II) werden modifizierte Toluylendiisocyanate, z.B. 2,4-und 2,6-Toluylen-diisocyanat sowie beliebige Gemische dieser Isomeren ("TDI"), optional in Mischungen mit Polyphenylpolymethylenpolyisocyanaten, wie sie durch Anilin-Formaldehyd-Kondensation und anschließende Phosgenierung hergestellt werden ("rohes MDI") eingesetzt. Weitere Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 4,4'- und/oder 2,4'-Diphenylmethandiisocyanat ableiten, können mitverwendet werden. Bevorzugt weist das verwendete modifizierte Toluylendiisocyanat II)a) NCO-Gehalte von kleiner 44 Gew.-%, besonders bevorzugt kleiner 42 Gew.-%, ganz besonders bevorzugt kleiner 40 Gew.-% bezogen auf das modifizierte Toluylendiisocyanat II)a) auf.

Vorteilhaft ist das erfindungsgemäße Verfahren, wenn die verwendete Polyisocyanatzusammensetzung II aus 95 - 100 Gew.-% bezogen auf die Gesamtmenge der Polyisocyanatzusammensetzung II eines modifizierten Toluylendiisocyanats II(a) mit einem NCO-Gehalt von weniger als 44 Gew.-% besteht.
Vorteilhaft ist das erfindungsgemäße Verfahren, wenn das verwendete modifizierte Toluylendiisocyanat mit einem NCO-Gehalt von weniger als 44 Gew.-%, bezogen auf das modifizierte Toluylendiisocyanat II)a) durch Modifikation einer Mischung von 65-100 Gew.-%, bezogen auf die Gesamtmenge des modifizierten Toluylendiisocyanats II)a), 2.4 Toluylendiisocyanat mit 0-35 Gew.-%, bezogen auf die Gesamtmenge des modifizierten Toluylendiisocyanats II)a), 2,6-Toluylendiisocyanat mit einer Komponente, enthaltend mindestens zwei gegenüber Isocyanaten reaktive Gruppen, erhalten wird.

Zur Herstellung von Polyurethanschaumstoffen wird als Komponente III) Wasser als chemisches Treibmittel eingesetzt, das durch Reaktion mit Isocyanatgruppen Kohlendioxid als Treibgas liefert. Bevorzugt wird Wasser in einer Menge von 6 bis 40 Gewichtsteilen, bevorzugt 8 bis 20 Gewichtsteile, bezogen auf die Summe der Mengen an Komponenten I)a), I)b), I)c) und I)d) eingesetzt.

Es können als Komponente IV) zusätzlich auch nicht brennbare physikalische Treibmittel wie Kohlendioxid, insbesondere in flüssiger Form, verwendet werden. Prinzipiell können auch Treibmittel aus der Klasse der Kohlenwasserstoffe wie C₃-C₆-Alkane, z.B. Butane, n-Pentan, Isopentan, Cyclopentan, Hexane o.ä. oder halogenierte Kohlenwasserstoffe wie Dichlormethan, Dichlormonofluormethan, Chlordifluorethane, 1,1-Dichlor-2,2,2-Trifluorethan, 2,2-Dichlor-2-fluorethan insbesondere chlorfreie Fluorkohlenwasserstoffe wie Difluormethan, Trifluormethan, Difluorethan, 1,1,1,2-Tetrafluorethan, Tetrafluorethan (R 134 oder R 134a), 1,1,1,3,3- Pentafluorpropan (R 245 fa), 1,1,1,3,3,3- Hexafluorpropan (R 256), 1,1,1,3,3-Pentafluorbutan (R 365 mfc), Heptafluorpropan oder auch Schwefelhexafluorid verwendet werden. Auch Gemische dieser Treibmittel sind verwendbar.

Als Komponente V) sind des Weiteren in der Zusammensetzung für die Herstellung der erfindungsgemäßen Polyurethanschaumstoffe auch Katalysatoren für die Treib- und Vernetzungsreaktion enthalten. Katalysatoren der an sich bekannten Art, sind z.B. tertiäre Amine, wie N,N' -Dimethylaminoethanol, Triethylamin, Tributylamin, N-Methyl-morphölin, N-Ethyl-morpholin, N,N,N',N'-Tetramethyl-ethylendiamin, Pentamethyl-diethylentriamin und höhere Homologen (DE-A 2 624 527 und DE-A 2 624 528), 1,4-Diazabicyclo[2,2,2]octan, N-Methyl-N'-dimethylaminoethylpiperazin, Bis-(dimethylaminoalkyl)-piperazin, N,N-Dimethylbenzylamin, N,N-Dimethylcyclohexylamin, N,N-Diethylbenzylamin, Bis-(N,N-diethylaminoethyl)-adipat, N,N,N',N'-Tetramethyl-1,3-butandiamin, N,N-Dimethyl-(3-phenylethylamin, 1,2-Dimethylimidazol, 2-Methylimidazol, monocyclische und bicyclische Amidine sowie Bis-(dialkylamino)-alkyl-ether wie 2,2-Bis(dimethyl-aminoethyl)-ether.

Beispiele von gegebenenfalls mitzuverwendenden Komponenten VI) als Flammschutzmittel sind Phosphorverbindungen aus der Klasse der Ester der Phosphorsäure, Phosphonsäure und/oder phosphoriger Säure mit halogenierten oder nichthalogenierten Alkoholkomponenten, z.B. Triphenylphosphat, Trikresylphosphat, Tributylphosphat, Tris(2-chlorisopropyl)phosphat, Tris(2,3-dichlorisopropylphosphat) Blähgraphit oder Kombinationen daraus. Weitere Beispiele sind feste Flammschutzmittel wie Melamin, Ammoniumpolyphosphat oder Blähgraphit oder Kombinationen daraus.

Beispiele von gegebenenfalls mitzuverwendenden Komponenten VII) sowie VIII) sind Schaumstoffstabilisatoren, Zellregler, Reaktionsverzögerer, Stabilisatoren gegen Verfärbungen und Oxidationen, Weichmacher, Farbstoffe und Füllstoffe sowie fungistatisch und bakteriostatisch wirksame Substanzen. Diese werden meist der Polyolkomponente in Mengen von 0 bis 30 Gewichtsteilen, bevorzugt 2 bis 10 Gewichtsteilen bezogen auf die Polyolzusammensetzung I zugesetzt. Einzelheiten über Verwendungs- und Wirkungsweise dieser Zusatzmittel sind in G. Oertel (Hrsg): "Kunststoff-Handbuch", Band VII, Carl Hanser Verlag, 3. Auflage, München 1993, Seite 110-115 beschrieben.

Zur Herstellung der erfindungsgemäßen Polyurethanschaumstoffe werden die Reaktionskomponenten erfindungsgemäß nach dem an sich bekannten Einstufenverfahren, dem Präpolymerverfahren oder Semipräpolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl Hanser Verlag, München 1966, z.B. auf den Seiten 121 bis 205 beschrieben.

Bei Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz in Frage.

In der Form schäumt das schaumfähige Reaktionsgemisch auf und bildet den Formkörper. Die Formverschäumung kann dabei so durchgeführt werden, dass das Formteil an seiner Oberfläche eine Zellstruktur aufweist. Sie kann aber auch so durchgeführt werden, dass das Formteil eine kompakte Haut und einen zelligen Kern erhält. Erfindungsgemäß kann man in diesem Zusammenhang, so vorgehen, dass man in die Form so viel schaumfähiges Reaktionsgemisch einträgt, dass der gebildete Schaumstoff die Form gerade ausfüllt.

Man kann aber auch so arbeiten, dass man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 31 78 490 und US-PS 31 82 104 beschrieben.

Bei der Formverschäumung werden vielfach an sich bekannte "äußere Trennmittel" wie Siliconöle, mitverwendet. Man kann aber auch so genannte "innereTrennmittel" gegebenenfalls im Gemisch mit äußeren Trennmitteln, verwenden, wie sie z.B. aus den DE-OS 21 21 670 und DE-OS 23 07 589 bekannt geworden sind.

Bevorzugt werden aber die Schaumstoffe durch Blockverschäumung hergestellt.

Die nach dem erfindungsgemäßen Verfahren erhältlichen Polyurethanschäume werden bevorzugt zur Schall- und Wärmeisolation, z.B. in Kraftfahrzeugen und Bauanwendungen eingesetzt.

### Beispiele

Bei der für die Herstellung von Polyurethanschaumstoffen üblichen Verarbeitung nach dem Einstufenverfahren werden in den Beispielen zur Reaktion gebracht:
- Polyol 1: trifunktionelles Polyetherpolyol, hergestellt durch Kaliumhydroxid-katalysierte Alkoxylierung von Glycerin mit einem Gemisch von Propylenoxid und Ethylenoxid im Mengenverhältnis 89/11, einer OH-Zahl von 48 mg KOH/g und einem Anteil an sekundären Hydroxylendgruppen von 94 %
- Polyol 2: trifunktionelles Polyetherpolyol, hergestellt durch Kaliumhydroxid-katalysierte Alkoxylierung von Glycerin mit Propylenoxid, einer OH-Zahl von 56 mg KOH/g und einem Anteil an sekundären Hydroxylendgruppen von 96 %
- Polyol 3: trifunktionelles Polyetherpolyol, hergestellt durch DMC-katalysierte Alkoxylierung von Glycerin mit einem Gemisch von Propylenoxid und Ethylenoxid im Mengenverhältnis 89/11, einer OH-Zahl von 48 mg KOH/g und einem Anteil an sekundären Hydroxylendgruppen von 89 %
- Polyol 4: trifunktionelles Polyetherpolyol, hergestellt durch Kaliumhydroxid-katalysierte Alkoxylierung von Glycerin mit Propylenoxid (87 %) und anschließend mit Ethylenoxid (13 %), einer OH-Zahl von 28 mg KOH/g und einem Anteil an sekundären Hydroxylendgruppen von 21 %
- Polyol 5: Desmophen^{®} 2200 B (Bayer MaterialScience AG, Leverkusen), ein Polyesterpolyol auf Basis Trimethylolpropan, Diethylenglykol und Adipinsäure mit einer OH-Zahl von 60 mg KOH/g
- Niax^{®} Silicone L-620:: Polyethersiloxan-basierender Schaumstoffstabilisator (GE Specialty Chemicals)
- Niax^{®} Catalyst A1:: Bis[2-dimethylamino)ethyl]ether in Dipropylenglykol (GE Specialty Chemicals)
- Niax^{®} Catalyst DMEA:: Dimethylaminoethanol (GE Specialty Chemicals)
- Addocat^{®} SO:: Zinn 2-Ethylhexanoat (Fa. Rheinchemie, Mannheim)
- Isocyanat 1:: Gemisch aus 2,4- und 2,6-TDI (80:20) mit einem NCO-Gehalt von 48 Gew.-%
- Isocyanat 2: biuretmodifiziertes Gemisch aus 2,4- und 2,6-TDI (80:20) mit einem NCO-Gehalt von 37 Gew.-%
- Isocyanat 3: polymeres MDI mit einem NCO-Gehalt von 31,5 Gew.-%

**Beispiel 1**

| | |
|---|---|
| Polyol 3 | 100 Gew.-Teile |
| Niax^{®} Catalyst DMEA | 0,20 Gew.- Teile |
| Niax^{®} Catalyst A1 | 0,20 Gew.- Teile |
| Niax^{®} Silicone L-620 | 2,50 Gew.- Teile |
| Addocat^{®} SO | 0,1 Gew.- Teile |
| Wasser | 20,0 Gew.- Teile |
| Isocyanat 2 | 188 Gew.- Teile |
| Kennzahl | 72 |
| Rohdichte | 10,7 kg/m3 |
| Stauchhärte, (40% Komp.) | 5,2 kPa |
| Zugfestigkeit | 75 kPa |
| Bruchdehnung | 27 % |

**Beispiel 2**

| | |
|---|---|
| Polyol 3 | 100 Gew.-Teile |
| Niax^{®} Catalyst DMEA | 0,20 Gew.- Teile |
| Niax^{®} Catalyst A1 | 0,20 Gew.- Teile |
| Niax^{®} Silicone L-620 | 2,50 Gew.- Teile |
| Addocat^{®} SO | 0,1 Gew.- Teile |
| Wasser | 20,0 Gew.- Teile |
| Isocyanat 2 | 141 Gew.- Teile |
| Isocyanat 3 | 54,6 Gew.- Teile |
| Kennzahl | 72 |
| Rohdichte | 10,8 kg/m3 |
| Stauchhärte, (40% Komp.) | 5,2 kPa |
| Zugfestigkeit | 59 kPa |
| Bruchdehnung | 22 % |

**Beispiel 3**

| | |
|---|---|
| Polyol 3 | 100 Gew.-Teile |
| Niax^{®} Catalyst DMEA | 0,20 Gew.- Teile |
| Niax^{®} Catalyst A1 | 0,20 Gew.- Teile |
| Niax^{®} Silicone L-620 | 2,50 Gew.- Teile |
| Addocat^{®} SO | 0,1 Gew.- Teile |
| Wasser | 20,0 Gew.- Teile |
| Isocyanat 2 | 94 Gew.- Teile |
| Isocyanat 3 | 109,9 Gew.- Teile |
| Kennzahl | 72 |
| Rohdichte | 11,3 kg/m3 |
| Stauchhärte, (40% Komp.) | 7,0 kPa |
| Zugfestigkeit | 72 kPa |
| Bruchdehnung | 23 % |

**Beispiel 4**

| | |
|---|---|
| Polyol 3 | 100 Gew.-Teile |
| Niax^{®} Catalyst DMEA | 0,20 Gew.- Teile |
| Niax^{®} Catalyst A1 | 0,20 Gew.- Teile |
| Niax^{®} Silicone L-620 | 2,50 Gew.- Teile |
| Addocat^{®} SO | 0,1 Gew.- Teile |
| Wasser | 20,0 Gew.- Teile |
| Isocyanat 2 | 47 Gew.- Teile |
| Isocyanat 3 | 164,9 Gew.- Teile |
| Kennzahl | 72 |
| Rohdichte | 11,9 kg/m3 |
| Stauchhärte, (40% Komp.) | 7,9 kPa |
| Zugfestigkeit | 66 kPa |
| Bruchdehnung | 16 % |

**Vergleichsbeispiel 1**

| | |
|---|---|
| Polyol 3 | 100 Gew.-Teile |
| Niax^{®} Catalyst DMEA | 0,20 Gew.- Teile |
| Niax^{®} Catalyst A1 | 0,20 Gew.- Teile |
| Niax^{®} Silicone L-620 | 2,50 Gew.- Teile |
| Addocat^{®} SO | 0,1 Gew.- Teile |
| Wasser | 20,0 Gew.- Teile |
| Isocyanat 3 | 219,8 Gew.- Teile |
| Kennzahl | 72 |
| Rohdichte | 13,2 kg/m3 |
| Stauchhärte, (40% Komp.) | 8,4 kPa |
| Zugfestigkeit | 48 kPa |
| Bruchdehnung | 8 % |

**Vergleichsbeispiel 2**

| | |
|---|---|
| Polyol 4 | 100 Gew.-Teile |
| Niax^{®} Catalyst DMEA | 0,20 Gew.- Teile |
| Niax^{®} Catalyst A1 | 0,20 Gew.- Teile |
| Niax^{®} Silicone L-620 | 2,50 Gew.- Teile |
| Addocat^{®} SO | 0,1 Gew.- Teile |
| Wasser | 20,0 Gew.- Teile |
| Isocyanat 2 | 188 Gew.- Teile |
| Kennzahl | 72 |

Der Schaumstoff hatte keine messbaren physikalischen Eigenschaften, da er beim Herstellversuch kollabierte.

**Beispiel 5**

| | |
|---|---|
| Polyol 2 | 80 Gew.-Teile |
| Polyol 5 | 20 Gew.-Teile |
| Niax^{®} Catalyst DMEA | 0,20 Gew.- Teile |
| Niax^{®} Catalyst A1 | 0,20 Gew.- Teile |
| Niax^{®} Silicone L-620 | 2,50 Gew.- Teile |
| Addocat^{®} SO | 0,1 Gew.-Teile |
| Wasser | 20,0 Gew.- Teile |
| Isocyanat 2 | 170,8 Gew.- Teile |
| Kennzahl | 65 |
| Rohdichte | 9,7 kg/m3 |
| Stauchhärte, (40% Komp.) | 7,9 kPa |
| Zugfestigkeit | 66 kPa |
| Bruchdehnung | 16 % |

**Vergleichsbeispiel 3**

| | |
|---|---|
| Polyol 2 | 80 Gew.-Teile |
| Polyol 5 | 20 Gew.-Teile |
| Niax^{®} Catalyst DMEA | 0,20 Gew.- Teile |
| Niax^{®} Catalyst A1 | 0,20 Gew.- Teile |
| Niax^{®} Silicone L-620 | 2,50 Gew.- Teile |
| Addocat^{®} SO | 0,1 Gew.- Teile |
| Wasser | 20,0 Gew.- Teile |
| Isocyanat 3 | 219,8 Gew.- Teile |
| Kennzahl | 72 |
| Rohdichte | 13,2 kg/m3 |
| Stauchhärte, (40% Komp.) | 8,4 kPa |
| Zugfestigkeit | 48 kPa |
| Bruchdehnung | 8 % |

## Patentansprüche

1. Verfahren zur Herstellung von Polyurethanschaumstoffen mit einer Rohdichte von weniger als 25 kg m⁻³, bei dem
I) eine Polyolzusammensetzung, enthaltend
a) 30-100 Gew.-%, bezogen auf die Gesamtmenge der Polyolzusammensetzung I eines Polyoxyalkylenpolyetherpolyols mit einer nominellen Funktionalität von 2-4, einer durchschnittlichen Molmasse von 1500-6000, einem Anteil von größer 35% an sekundären Hydroxylendgruppen, bezogen auf die Gesamtzahl an Hydroxylendgruppen des Polyoxyalkylenpolyetherpolyols sowie
b) 0-50 Gew.-% bezogen auf die Gesamtmenge der Polyolzusammensetzung I eines Polyoxyalkylenpolyetherpolyols mit einer nominellen Funktionalität von 2-3,5, einer durchschnittlichen Molmasse von 400-1000 sowie
c) 0-50 Gew.-% bezogen auf die Gesamtmenge der Polyolzusammensetzung I eines Polyoxyalkylenpolyetherpolyols mit einer nominellen Funktionalität von 4-8, einer durchschnittlichen Molmasse von 300-1000 sowie
d) 0- 30 Gew.-% bezogen auf die Gesamtmenge der Polyolzusammensetzung I eines Polyesterpolyols mit einer Hydroxylzahl von 40 - 500 mit einem
II) Polyisocyanatzusammensetzung mit einem Isocyanatgehalt von 31-43 Gew.-% bezogen auf die Gesamtmenge der Polyisocyanatzusammensetzung in einer Menge entsprechend einem Index NCO/OH von 25-150, enthaltend
a) 20-100 Gew.-% bezogen auf die Gesamtmenge der Polyisocyanatzusammenstzung II eines modifizierten Toluylendiisocyanats mit einem NCO-Gehalt von weniger als 44 Gew.-%; bezogen auf das modifizierte Toluylendiisocyanat II)a) sowie
b) 0-80 Gew.-% bezogen auf die Gesamtmenge der Polyisocyanatzusammensetzung II eines Isocyanats aus der Gruppe der MDI-Produkte sowie
III) 6-40 Gewichtsteilen Wasser, bezogen auf die Gesamtmenge der Polyolzusammensetzung I, sowie
IV) gegebenenfalls physikalischen Treibmitteln,
V) Katalysatoren,
VI) Flammschutzmitteln,
VII) Stabilisatoren sowie
VIII) gegebenenfalls weiteren Hilfs- und Zusatzstoffen umgesetzt werden.

2. Verfahren gemäß Anspruch 1, wobei der Index NCO/OH der Polyisocyanatzusammensetzung II im Bereich von 35-120 liegt.

3. Verfahren nach einem der Ansprüchen 1 bis 2, wobei die verwendete Polyisocyanatzusammensetzung II einen Isocyanatgehalt von 35-39 Gew.-%, bezogen auf die gesamte Polyisocyanatzusammensetzung II aufweist.

4. Verfahren nach einem der Ansprüche 1 bis 3, wobei die verwendete Polyisocyanatzusammensetzung II aus
a) 50-100 Gew.-% bezogen auf die Gesamtmenge der Polyisocyanatzusammensetzung II eines modifizierten Toluylendiisocyanats mit einem NCO-Gehalt von weniger als 44 Gew.-%, bezogen auf das modifizierte Toluylendiisocyanat IIa) sowie
b) 0-50 Gew.-% bezogen auf die Gesamtmenge der Polyisocyanatzusammensetzung II eines Isocyanats aus der Gruppe der MDI-Produkte
besteht.

5. Verfahren nach einem der Ansprüchen 1 bis 4, wobei die verwendete Polyisocyanatzusammensetzung II aus 95-100 Gew.-% bezogen auf die Gesamtmenge der Polyisocyanatzusammensetzung II eines modifizierten Toluylendiisocyanats II)a) mit einem NCO-Gehalt von weniger als 44 Gew.-% besteht.

6. Verfahren nach einem der Ansprüchen 1 bis 5, wobei das verwendete modifizierte Toluylendiisocyanat mit einem NCO-Gehalt von weniger als 44 Gew.-%, bezogen auf das modifizierte Toluylendiisocyanat II)a) durch Modifikation einer Mischung von 65-100 Gew.-% bezogen auf die Gesamtmenge der Toluylendiisocanats II)a), 2,4-Toluylendiiscocyanat mit 0-35 Gew.- % bezogen auf die Gesamtmenge des modifizierten Toluylendiisocyanats II)a), 2,6-Toluylendiiscocyanat mit einer Komponente, enthaltend mindestens zwei gegenüber Isocyanaten reaktive Gruppen, erhalten wird.

7. Polyurethanschaum erhältlich nach einem Verfahren nach einem der Ansprüche 1 bis 5.

8. Verwendung des Polyurethanschaumstoffes nach Anspruch 7, zur Schall- und/oder Wärmeisolierung.
